(19)

Europäisches Patentamt
European Patent Office
Office européen des brevets

(11) **EP 3 683 092 A1**

(12) **EUROPEAN PATENT APPLICATION**
published in accordance with Art. 153(4) EPC

(43) Date of publication:
**22.07.2020 Bulletin 2020/30**

(21) Application number: **18867658.9**

(22) Date of filing: **11.10.2018**

(51) Int Cl.:
**B60N 2/07** (2006.01)

(86) International application number:
**PCT/JP2018/037953**

(87) International publication number:
**WO 2019/078086 (25.04.2019 Gazette 2019/17)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **17.10.2017 JP 2017201075**

(71) Applicant: **Mazda Motor Corporation**
**Aki-gun**
**Hiroshima 730-8670 (JP)**

(72) Inventors:
• **SAWAI, Ryo**
**Aki-gun**
**Hiroshima 730-8670 (JP)**
• **NONOWAKI, Koji**
**Aki-gun**
**Hiroshima 730-8670 (JP)**

(74) Representative: **Thoma, Michael**
**Lorenz Seidler Gossel**
**Rechtsanwälte Patentanwälte**
**Partnerschaft mbB**
**Widenmayerstraße 23**
**80538 München (DE)**

(54) **SEAT SLIDE MECHANISM**

(57) A seat slide mechanism (15) includes: a lower rail (16) fixed to a floor pan (1) constituting a part of a vehicle body of a vehicle and extending in front-rear directions of the vehicle; a slider (17) slidable in the lower rail (16) and allowing a seat (10) to be mounted thereabove; and a slide-allowing member (30) arranged between the lower rail (16) and the slider (17) and enabling sliding of the slider (17) along the lower rail (16). The slide-allowing member (30) has a spring constant set to be smaller than a spring constant of the lower rail (16) or a spring constant of the slider (17).

FIG.2

EP 3 683 092 A1

## Description

TECHNICAL FIELD

The present invention relates to a seat slide mechanism to be provided to a vehicle.

BACKGROUND ART

A vehicle seat traditionally includes a seat cushion, a seat back, a headrest, and a seat slide mechanism. The seat cushion forms a seating surface for an occupant. The seat back forms a backrest surface for the occupant. The headrest holds the head of the occupant. The seat slide mechanism enables adjustment of a seat position relative to front-rear directions of the vehicle, in accordance with the physique of the occupant seated on the seat.

Specifically, as disclosed in Patent Document 1, the seat slide mechanism includes a lower rail, a slider, and a plurality of balls (steel balls). The lower rail is fixed to a floor pan of a vehicle body and extends in the front-rear directions of the vehicle. The slider is slidable in the lower rail, and allows a seat to be attached thereabove. The balls are disposed between the lower rail and the slider to allow sliding of the slider along the lower rail.

CITATION LIST

PATENT DOCUMENT

PATENT DOCUMENT 1: Japanese Unexamined Patent Publication No. 2016-196262

SUMMARY OF THE INVENTION

TECHNICAL PROBLEM

Such a vehicle seat is to be sat by an occupant of the vehicle, and requires an ability to absorb and damp vibration input to the seat, for the sake of improved comfort.

Specifically, of the input vibration from outside the vehicle, the vibration from the road surface that is input, through the tires, to the floor pan serving as a vehicle body is transmitted to the seat through the above-described seat slide mechanism, and sensed by the occupant. To address this, there is a need for absorbing and damping the vibration input from outside the vehicle to improve the noise, vibration, and harshness (NVH) performance of the vehicle.

In view of the foregoing background, it is an object of the present invention to provide a seat slide mechanism capable of effectively reducing vibration to be sensed by an occupant seated on a seat of the vehicle, and thus improving the NVH performance of the vehicle.

SOLUTION TO THE PROBLEM

To achieve the above object, the present invention is directed to a seat slide mechanism to be provided in a vehicle. The seat slide mechanism includes: a lower rail fixed to a floor pan constituting a part of a vehicle body of the vehicle and extending in front-rear directions of the vehicle; a slider slidable in the lower rail and allowing a seat to be mounted thereabove; and a slide-allowing member arranged between the lower rail and the slider and enabling sliding of the slider along the lower rail. The slide-allowing member has a spring constant set to be smaller than a spring constant of the lower rail or a spring constant of the slider.

In the above structure, the spring constant of the slide-allowing member is set to be smaller than the spring constant of the lower rail or the spring constant of the slider. This achieves the following effects.

Namely, vibration can be effectively damped by the slide-allowing member by reducing the spring constant of the slide-allowing member of the seat slide mechanism that has a large mass and is arranged closely to a vibration input point (floor pan) in a vibration transmission pathway extending from the vibration input point to an occupant. This consequently enables effective reduction of vibration to be sensed by the occupant seated on the seat, and improves the NVH performance of the vehicle.

This is based on a finding that, to achieve a better NVH performance of the vehicle, it is most effective, in reducing vibration, to improve the seat slide mechanism having a large mass and arranged very closely to a vibration input point in a vibration transmission pathway extending from the floor pan, which serves as the vibration input point, to the occupant.

Further, the above-described structure achieves the vibration reduction effect with a simple modification essentially to the slide-allowing member, with respect to an existing seat slide mechanism.

An embodiment of the above seat slide mechanism is such that the slide-allowing member is structured by a tubular hollow member or a solid member having a pillar shape and is arranged between the lower rail and the slider in such a manner as to extend along the lower rail and the slider.

This structure enables easy control of the spring constant of the slide-allowing member by modifying the length and the like of the tubular hollow member or the solid member having a pillar shape. The hollow member may have a cylindrical shape or a shape of a square tube. The solid member may have a columnar shape or a shape of a square column.

Another embodiment of the above seat slide mechanism is such that the slide-allowing member is structured by a spheric member, and that the spheric member is a hollow spheric member whose inside is hollowed out, or a solid spheric member having an outer shell and an interior member whose spring constant is set to be smaller than a spring constant of the outer shell.

With this structure, the spring constant of the slide-allowing member made of a spheric member can be easily reduced. Further, since the slide-allowing member is structured by the spheric member, it is possible to achieve the above-described effect of reducing the vibration without significant modification to a typical existing seat slide mechanism having a plurality of balls that allow sliding of the slider along the lower rail.

ADVANTAGES OF THE INVENTION

According to a seat slide mechanism of the present invention described above, vibration is damped by a slide-allowing member of the seat slide mechanism having a large mass and arranged closely to a vibration input point (floor pan) in a vibration transmission pathway extending from the vibration input point to the occupant. This can effectively reduce the vibration to be sensed by the occupant seated on the seat, and improve the NVH performance of the vehicle.

BRIEF DESCRIPTION OF THE DRAWINGS

FIG. 1 is a perspective view of a vehicle seat attached to a floor pan of a vehicle via a pair of right and left seat slide mechanisms according to an exemplary embodiment, which vehicle seat is for an occupant of the vehicle to sit thereon.

FIG. 2 is a cross-sectional view providing an enlarged view of a main part of one of the pair of right and left seat slide mechanisms, as viewed from the front of the vehicle.

FIG. 3 is a perspective view showing slide-allowing members and retainers in a pair of right and left units provided in one of the seat slide mechanisms.

FIG. 4 is a cross-sectional view of slide-allowing members of a first embodiment, each of which is a cylindrical hollow member.

FIG. 5 is an explanatory diagram showing a vibration model of the vehicle seat.

FIG. 6 is a cross-sectional view of slide-allowing members of a second embodiment, each of which is a solid member having a columnar shape.

FIG. 7 is a cross-sectional view of slide-allowing members of a third embodiment, each of which is a solid member having a columnar shape.

FIG. 8 is a diagram of a fourth embodiment corresponding to FIG. 3, showing a pair of right and left units (slide-allowing members and retainers).

FIG. 9 is a cross-sectional view of slide-allowing members of the fourth embodiment, each of which is a spheric member with its inside being hollowed out.

FIG. 10 is a cross-sectional view of slide-allowing members of a fifth embodiment, each of which is a spheric member having an outer shell and an interior member.

DESCRIPTION OF EMBODIMENTS

Exemplary embodiments will now be described in detail with reference to the drawings.

(First Embodiment)

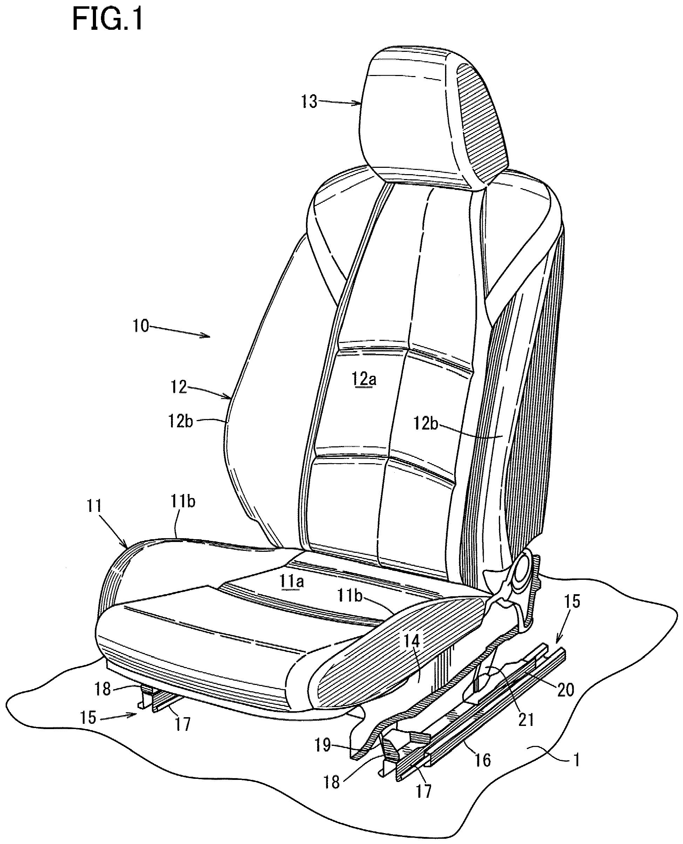

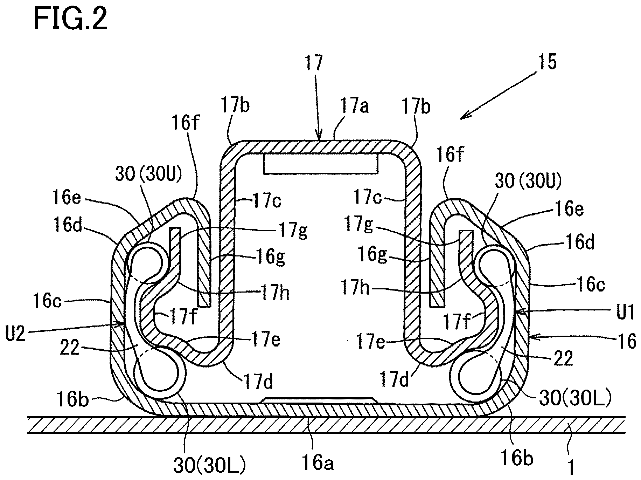

FIG. 1 illustrates a vehicle seat (hereinafter, seat) 10 attached to a floor pan 1 of a vehicle via a pair of right and left seat slide mechanisms 15 according to an exemplary first embodiment, which seat 10 is for an occupant of the vehicle to sit thereon. FIG. 2 shows an enlarged view of a main part of one of the pair of right and left seat slide mechanisms 15. The following description of the seat 10 and the seat slide mechanisms 15 assumes that the seat 10 and the seat slide mechanisms 15 are mounted on the vehicle. The front, rear, left, right, top, and bottom of the vehicle refer to the front, rear, left, right, top, and bottom of the seat 10 mounted on the vehicle, respectively. The front, rear, left, right, top, and bottom of the vehicle are hereinafter simply referred to as "front," "rear," "left," "right," "top," and "bottom," respectively.

In FIG. 1, the seat 10 includes a seat cushion 11, a seat back 12, and a headrest 13. The seat cushion 11 forms a seating surface for an occupant to sit on the seat 10. The seat back 12 forms a backrest surface for the occupant and is capable of reclining. The headrest 13 holds the head of the occupant and the height of the headrest 13 is adjustable.

The seat cushion 11 includes a seat portion 11a and a pair of right and left side support portions 11b (so-called projected portions), which are integrally formed. The seat portion 11a is located in a middle portion relative to the right-left directions. The side support portions 11b project upward from both right and left side portions of the seat portion 11a, respectively, and extend in the front-rear directions. The seat cushion 11 has a seat cushion frame 14, a seat cushion spring (not shown), and a urethane member (not shown). The seat cushion frame 14 has a right end portion and a left end portion (FIG. 1 only shows the left end portion) and a connecting portion. The right end portion and the left end portion are positioned above the pair of right and left seat slide mechanisms 15, which will be described later, respectively. The connecting portion connects the right end portion with the left end portion.

The seat back 12 includes a backrest 12a and a pair of right and left side support portions 12b (so-called projected portions), which are integrally formed. The backrest 12a is positioned in a middle portion relative to the right-left directions. The side support portions 12b project forward from both right and left side portions of the backrest 12a, respectively, and extend in the up-down direction. Although illustration is omitted, the seat back 12 has a seat back frame, a seat back spring, and a urethane member.

In the present embodiment, the seat 10 is a bucket seat (synonym to a separate seat). The seat 10 is configured so that its position is adjustable according to the physique of the occupant.

That is, the pair of right and left seat slide mechanisms 15 are provided between the seat cushion frame 14 of the seat cushion 11 of the seat 10 and the floor pan 1 constituting a part of the vehicle body of the vehicle. The pair of right and left seat slide mechanisms 15 are formed to have the same structure. The seat 10 is attached to the floor pan 1 so as to be relatively movable in the front-rear directions by the pair of right and left seat slide mechanisms 15.

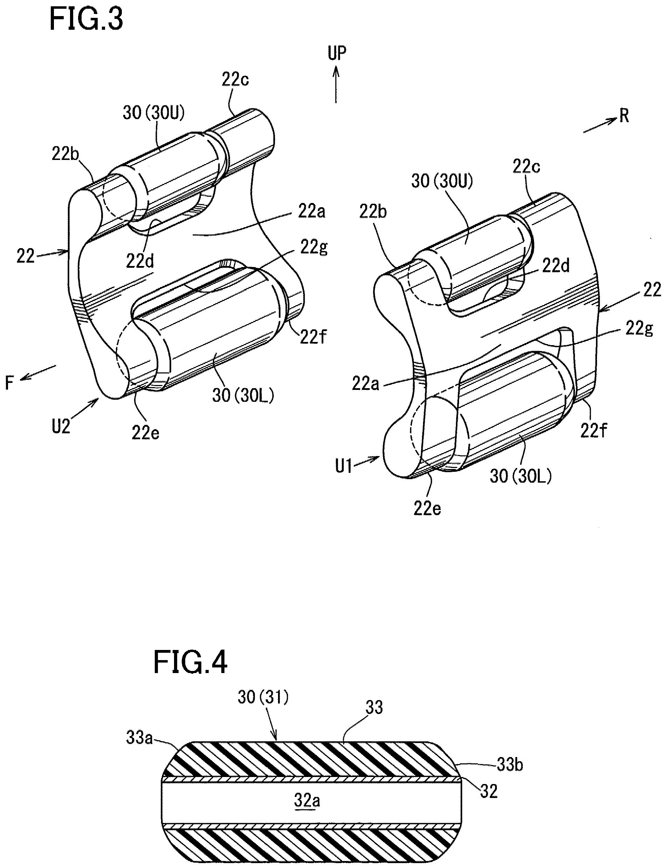

Each seat slide mechanism 15 includes a lower rail 16, a slider 17, and a plurality of slide-allowing members 30 (see FIG. 2 and FIG. 3). The lower rail 16 is fixed to the floor pan 1 and extends in the front-rear directions. The slider 17 is slidable in the lower rail 16. Above the slider 17, the seat 10 is attached (specifically, the seat cushion 11). The plurality of slide-allowing members 30 are arranged between the lower rail 16 and the slider 17, and allow the slider 17 to slide along the lower rail 16.

As shown in FIG. 1, an upper portion (a later-described top part 17a (see FIG. 2)) of the slider 17 constituting the seat slide mechanism 15 and the left end portion or the right end portion of the seat cushion frame 14 are coupled to each other at two positions, that is, at a front position and at a rear position. For the coupling at the front position, a lower bracket 18 and an upper bracket 19 are used. For the coupling at the rear position, a lower bracket 20 and an upper bracket 21 are used.

As shown in FIG. 2, the plurality of slide-allowing members 30 of each seat slide mechanism 15 are arranged between the lower rail 16 and the slider 17, while being supported by a plurality of retainers 22.

As shown in FIG. 2 and FIG. 3, each retainer 22 supports the slide-allowing member 30 in each of its upper end part and its lower end part. In the upper end part of each retainer 22, a relatively small slide-allowing member 30 is supported. This slide-allowing member 30 is also referred to as an "upper slide-allowing member 30U." In the lower end part of the retainer 22, a relatively large slide-allowing member 30 is supported. This slide-allowing member 30 is also referred to as a "lower slide-allowing member 30L." The upper and lower slide-allowing members 30U and 30L are combined as a unit by the retainer 22, and each seat slide mechanism 15 has a plurality of such units U1 and U2.

The unit U1 is arranged on the left side of the seat slide mechanism 15, whereas the unit U2 is arranged on the right side of the seat slide mechanism 15. The left unit U1 and the right unit U2 are arranged substantially symmetrically with respect to the center of the right-left directions of the lower rail 16. The respective structures of the left unit U1 and the right unit U2 are substantially symmetrical with respect to the center of the right-left directions. These units U1 and U2 having structures that are substantially symmetrical to each other in the right-left directions are paired, and the present embodiment includes a plurality of pairs of units U1 and U2 aligned in the longitudinal direction (corresponding to the front-rear directions) of the lower rail 16 and the slider 17, between the lower rail 16 and the slider 17.

As shown in FIG. 2, the lower rail 16 has a bottom part 16a, two standing parts 16c, two connecting parts 16e, and two interior parts 16g which are integrally formed by bending. The bottom part 16a is to be fixed to the floor pan 1. The two standing parts 16c rise upward from rounded corner parts 16b, on both ends of the bottom part 16a relative to a vehicle width direction (corresponding to the right-left directions). The two connecting parts 16e extend obliquely upward from arched corner parts 16d arranged at the respective upper ends of the two standing parts 16c. The two interior parts 16g extend downward from arched corner parts 16f arranged at the respective upper ends of the two connecting parts 16e. It is possible to say that the lower rail 16 has an outline in a shape of a groove open upward.

As shown in FIG. 2, the slider 17 has a top part 17a, two standing parts 17c, two connecting parts 17e, two lower exterior portions 17f, and two upper exterior portions 17g which are integrally formed by bending. To the top part 17a, the seat 10 is attached through brackets 18 to 21 (see FIG. 1). The two standing parts 17c extend downward from corner parts 17b, on both ends of the top part 17a relative to the vehicle width direction (corresponding to the right-left directions). The two connecting parts 17e extend outward and obliquely upward from corner parts 17d arranged at the respective lower ends of the two standing parts 17c. The two lower exterior portions 17f extend upward from the respective outer ends (upper ends) of the two connecting parts 17e. The two upper exterior portions 17g extend upward from arched corner parts 17h arranged at the respective upper ends of the two lower exterior portions 17f. The slider 17 is positioned in the groove of the lower rail 16 except for its top part 17a, and the top part 17a projects upward from the opening of the groove.

As shown in FIG. 2, the lower rail 16 and the slider 17 are each formed of steel. The lower rail 16 is formed symmetrically or substantially symmetrically with respect to the center in the left-right directions. The slider 17 is also formed symmetrically or substantially symmetrically with respect to the center in the left-right directions. The center of the slider 17 in the left-right directions substantially matches with the center in the left-right directions of the lower rail 16.

As shown in FIG. 3, each retainer 22 has a retainer body 22a. At an upper end part of the retainer body 22a, a pair of front and rear supports 22b and 22c are formed. Between the pair of front and rear supports 22b and 22c at the upper end part of the retainer body 22a, a recess 22d recessed downward is formed. The upper slide-allowing member 30U is positioned within the recess 22d and supported by the supports 22b and 22c.

Similarly to the upper end part of the retainer 22, a pair of front and rear supports 22e and 22f are formed at a lower end part of the retainer body 22a. Between the pair of front and rear supports 22e and 22f at the lower end part of the retainer body 22a, a recess 22g recessed upward is formed. The lower slide-allowing member 30L is positioned within the recess 22g and supported by the supports 22e and 22f.

Note that in FIG. 3, the arrow F is directed forward, the arrow R is directed rearward, and the arrow UP is directed upward.

In each seat slide mechanism 15, the spring constant of each slide-allowing member 30 is set to be smaller than the spring constant of a steel lower rail 16 or a steel slider 17.

In the present embodiment, as shown in FIG. 4, each of the slide-allowing members 30 is structured by a tubular (cylindrical shape in the present embodiment) hollow member 31 to reduce the spring constant thereof, and is arranged between the lower rail 16 and the slider 17 in such a manner as to extend along the lower rail 16 and the slider 17 (i.e., extend in the front-rear directions).

Specifically, the hollow member 31 is structured by a cylindrical pipe member 32 made of metal (e.g., stainless steel) and an outer shell 33. To be more specific, the outer circumferential face of the pipe member 32 is coated with a synthetic resin (e.g., ultralow friction fluororesin) to form the cylindrical outer shell 33 of the hollow member 31 integrally with the pipe member 32. Inside the pipe member 32, an internal space 32a is formed.

In this embodiment, substantially hemispherical portions 33a and 33b for supporting the hollow member 31 are formed integrally with both ends of the hollow member 31 relative to its longitudinal direction (both ends relative to the front-rear directions).

As shown in FIG. 3 and FIG. 4, of the slide-allowing members 30 each structured by the hollow member 31, the upper slide-allowing member 30U positioned on the upper side has a size of approximately 10 mm in length and approximately 5 mm in diameter.

Further, of the slide-allowing members 30 each structured by the hollow member 31, the lower slide-allowing member 30L positioned on the lower side has a size of approximately 14 mm in length and approximately 7 mm in diameter. However, these numeric values of the length and the diameter are no more than examples, and are not intended to limit the scope of the invention.

The slide-allowing members 30 (upper and lower slide-allowing members 30U and 30L) each structured by the hollow member 31 (so-called a hollow roller) shown in FIG. 4 are supported by the retainer 22 shown in FIG. 3 as follows. That is, the front and rear substantially hemispherical portions 33a and 33b of the upper slide-allowing member 30U are supported by the pair of front and rear supports 22b and 22c in the upper end part of the retainer 22. The front and rear substantially hemispherical portions 33a and 33b of the lower slide-allowing member 30L are supported by the pair of front and rear supports 22e and 22f in the lower end part of the retainer 22.

To support the substantially hemispherical portions 33a and 33b of the upper slide-allowing member 30U, the retainer 22 has recesses (not shown) formed on both opposing surface portions of the support 22b and the support 22c. These recesses are hemispherically concaved to correspond to the substantially hemispherical portions 33a and 33b. Further, to support the substantially hemispherical portions 33a and 33b of the lower slide-allowing member 30L, the retainer 22 has recesses (not shown) formed on both opposing surface portions of the support 22e and the support 22f. These recesses are hemispherically concaved to correspond to the substantially hemispherical portions 33a and 33b.

As shown in FIG. 2, while the units U1 and U2 are arranged between the lower rail 16 and the slider 17, the upper slide-allowing member 30U of each of the units U1 and U2 is interposed between the corner part 16d of the lower rail 16 and the corner part 17h of the slider 17, and the lower slide-allowing member 30L is interposed between the rounded corner part 16b of the lower rail 16 and the connecting part 17e of the slider 17.

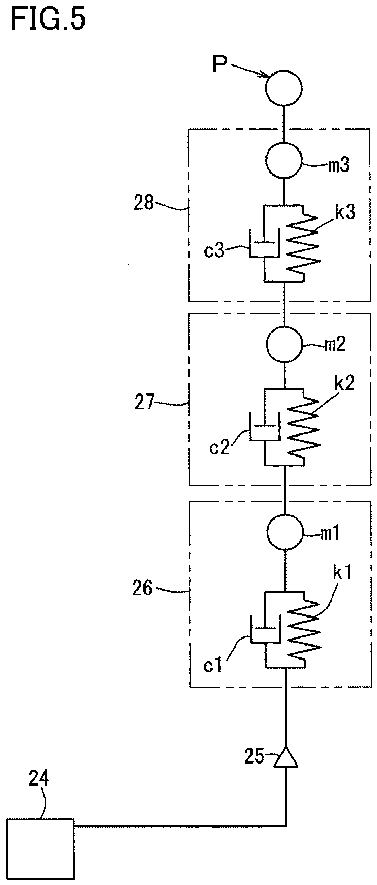

FIG. 5 shows a vibration model of the seat 10, from a vibration source 24 (vehicle wheels) to an occupant P seated on the seat 10, via a vibration input point 25 (floor pan 1).

The vibration model of the seat 10 is roughly divided into three elements: a seat frame 26, a seat spring 27, and a urethane member 28 constituting the seat cushion member.

The seat frame 26 includes the seat cushion frame 14, the seat back frame, and the seat slide mechanism 15. The seat frame 26 has a mass m1, a spring constant k1, and a damping term c1 (synonym to a "damping coefficient").

The seat spring 27 includes the seat cushion spring and the seat back spring. The seat spring 27 has a mass m2, a spring constant k2, and a damping term c2 (synonym to a "damping coefficient").

The urethane member 28 includes the urethane member of the seat cushion 11 and the urethane member of the seat back 12. The urethane member 28 has a mass m3, a spring constant k3, and a damping term c3 (synonym to a "damping coefficient").

An acceleration rate A of the entire system including the seat frame 26, the seat spring 27, and the urethane member 28 can be approximated by the formula (1) below based on the second law of motion (so-called "motion equation").

$$A \approx \alpha + [(c1 \cdot V + k1 \cdot x)/M]$$

In the formula (1):

"A" is the acceleration of the entire system;

"α" is an acceleration rate, regarding the seat frame 26, the seat spring 27, and the urethane member 28 as one piece;

the "c1 · V" is the product of the damping term c1 of the seat frame 26 (including, as an element, the seat slide mechanism 15 having the slide-allowing member 30) and the velocity V with respect to the vibration input point 25, regarding the seat frame 26, the seat spring 27, and the urethane member 28 as one piece;

the "k1 · x" is the product of the spring constant k1 of the seat frame 26 (including, as an element, the seat slide mechanism 15 having the slide-allowing member 30) and the displacement x with respect to the vibration input point 25, regarding the seat frame 26, the seat spring 27, and the urethane member 28 as one piece; and

"M" is the mass of the entire system, i.e., m1 + m2 + m3.

According to the formula (1), the acceleration rate A of the entire system decreases with an increase in the mass M (= m1 + m2 + m3) of the entire system. Further, the acceleration rate A of the entire system decreases with a decrease in the spring constant k1. Therefore, by reducing the acceleration rate A of the entire system, the entire system (the seat frame 26, the seat spring 27, the urethane member 28) will not vibrate.

Thus, to achieve a better NVH performance of the vehicle, it is most effective, in reducing and absorbing vibration, to improve the seat frame 26 having a large mass and arranged closely to the vibration input point 25 (particularly, the seat slide mechanism 15 arranged very closely to the vibration input point 25) in a vibration transmission pathway extending from the floor pan 1, which serves as the vibration input point 25, to the occupant P.

Based on this finding, the present embodiment takes a measure to reduce vibration at the seat slide mechanism 15 having a large mass and arranged very closely to the vibration input point 25 (floor pan 1) in the vibration transmission pathway extending from the vibration input point 25 to the occupant P.

To reduce the spring constant k1 of the seat frame 26, the present embodiment reduces the spring constant of each slide-allowing member 30 in the seat slide mechanism 15, thereby effectively reducing vibration at the seat 10.

In this embodiment, the spring constant of each slide-allowing member 30 is set to be smaller than the spring constant of the lower rail 16 or the slider 17. That is, since each slide-allowing member 30 is structured by the hollow member 31 which has the pipe member 32 made of stainless steel and the outer shell 33 made of a resin, the spring constant of each slide-allowing member 30 is smaller than the spring constant of the lower rail 16 made of steel or the slider 17 made of steel.

As described, the slide-allowing members 30 each having a reduced spring constant (more flexible) damps vibration at the seat slide mechanism 15 having a large mass and arranged very close to the vibration input point 25 (floor pan 1) in the vibration transmission pathway extending from the vibration input point 25 to the occupant P. This configuration effectively reduces the vibration (particularly, vibration in the up-down directions) to be sensed by the occupant P, while the occupant P is seated on the seat 10.

Further, the present embodiment achieves a vibration reduction effect with a simple modification essentially to the slide-allowing members (or the slide-allowing member and the retainers), with respect to an existing seat slide mechanism.

Further, in the present embodiment, each slide-allowing member 30 is structured by a tubular hollow member 31 and arranged between the lower rail 16 and the slider 17 so as to extends along the lower rail 16 and the slider 17. Therefore, by changing the length, for example, of the tubular hollow member 31, the spring constant of each slide-allowing member 30 can be easily controlled.

(Second Embodiment)

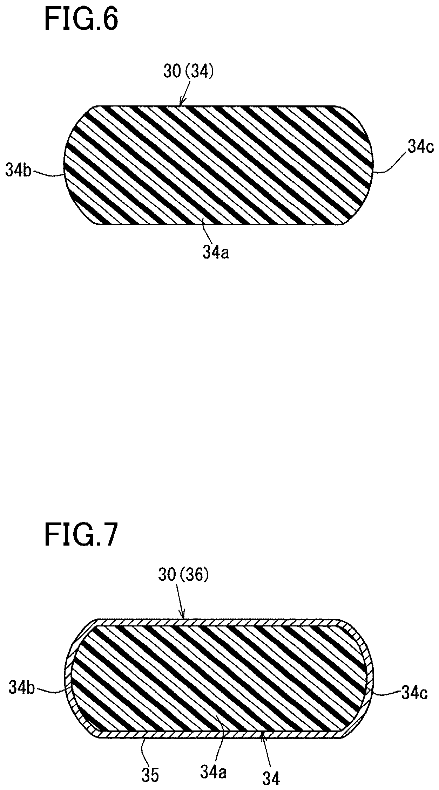

FIG. 6 shows an exemplary second embodiment, in which the structure of each slide-allowing member 30 is different from that of the first embodiment. The rest of the structure is similar to that of the first embodiment.

In the present embodiment, each of the slide-allowing members 30 is structured by a solid member 34 (so-called solid roller) having a pillar shape (columnar shape in the present embodiment) and is arranged between the lower rail 16 and the slider 17 in such a manner as to extend along the lower rail 16 and the slider 17 (i.e., extend in the front-rear directions).

Similarly to the above-described first embodiment, the spring constant of each slide-allowing member 30 in the present embodiment is set to be smaller than the spring constant of a steel lower rail 16 or a steel slider 17. To achieve this, the solid member 34 is made of a resin in the present embodiment.

A resin adoptable for this member can be a polyamide having an excellent impact resistance, a low-friction coefficient, and a self-lubricating property.

Also in this embodiment, hemispherical portions 34b and 34c for supporting the solid member 34 at the retainer 22 (see FIG. 3) are formed integrally with both ends of the columnar solid portion 34a of the solid member 34 relative to its longitudinal direction (both ends relative to the front-rear directions).

As described, in the second embodiment shown in FIG. 6, each of the slide-allowing members 30 is structured by a solid member 34 having a pillar shape (columnar shape in the present embodiment) and is arranged between the lower rail 16 and the slider 17 in such a manner as to extend along the lower rail 16 and the slider 17 (see FIG. 2), similarly to the above-described first embodiment.

This structure enables easy control of the spring constant of each slide-allowing member 30 by modifying the length and the like of the solid member 34 having a pillar shape.

(Third Embodiment)

FIG. 7 shows an exemplary third embodiment, in which the structure of each slide-allowing member 30 is different from those of the first and second embodiments. The rest of the structure is similar to those of the first and second embodiments.

That is, in the present embodiment, each slide-allowing member 30 is structured by a solid member 36 having a two-layer structure (inner and outer layers) which is formed by surrounding the entire outer surface of the solid member 34 of the second embodiment shown in FIG. 6 with an outer shell member 35.

In this embodiment, the solid member 34 is made of a resin (e.g., polyamide), and the outer shell member 35 is made of a metal (e.g., stainless steel).

Also in the present embodiment, each slide-allowing member 30 is arranged between the lower rail 16 and the slider 17 in such a manner as to extend along the lower rail 16 and the slider 17 (see FIG. 2), similarly to the above-described first and second embodiments. Further, similarly to the above-described first and second embodiments, the spring constant of each slide-allowing member 30 is set to be smaller than the spring constant of the lower rail 16 or the slider 17.

As described, in the third embodiment shown in FIG. 7, each of the slide-allowing members 30 is structured by a solid member 36 having a pillar shape (columnar shape in the present embodiment) and is arranged between the lower rail 16 and the slider 17 in such a manner as to extend along the lower rail 16 and the slider 17 (see FIG. 2), similarly to the above-described second embodiment.

This structure enables easy control of the spring constant of each slide-allowing member 30 by modifying the length and the like of the solid member 36 having a pillar shape. Further, in the present embodiment, the solid member 36 of each slide-allowing member 30 has a two-layer structure (inner and outer layers), and the outer layer is an outer shell member 35 made of stainless steel. This enables improvement of durability and antirust effect of each slide-allowing member 30.

(Fourth Embodiment)

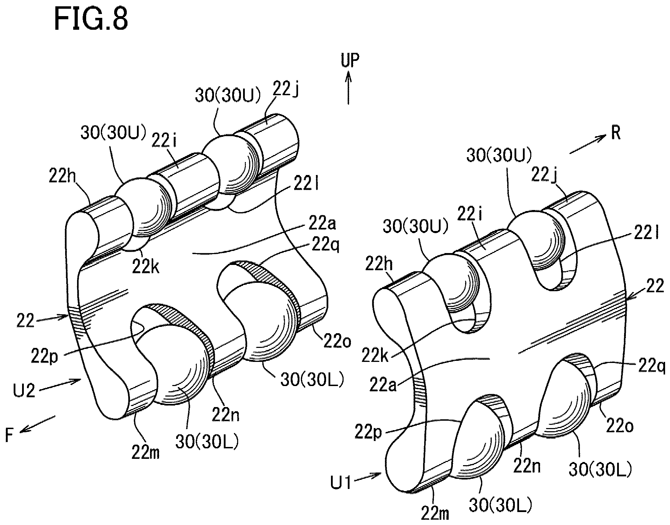

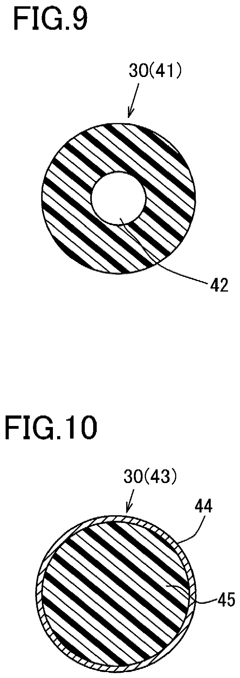

FIG. 8 and FIG. 9 show an exemplary fourth embodiment, in which the structure of each slide-allowing member 30 and the structure of each retainer 22 are different from those of the first to third embodiments. The rest of the structure is similar to those of the first to third embodiments.

That is, in the present embodiment, each slide-allowing member 30 is structured by a spheric member 41. Also in the present embodiment, the plurality of slide-allowing members 30 of each seat slide mechanism 15 are arranged between the lower rail 16 and the slider 17, while being supported by a plurality of retainers 22, similarly to the above-described first to third embodiments.

Each retainer 22 supports a plurality of slide-allowing members 30 (two in this embodiment) in each of its upper end part and its lower end part. In the upper end part of each retainer 22, relatively small slide-allowing members 30 are supported. These slide-allowing members 30 are also referred to as "upper slide-allowing members 30U." In the lower end part of the retainer 22, relatively large slide-allowing members 30 are supported. These slide-allowing members 30 are also referred to as "lower slide-allowing members 30L." The upper and lower slide-allowing members 30U and 30L are combined as a unit by the retainer 22, and each seat slide mechanism 15 has a plurality of such units U1 and U2.

Also in the present embodiment, the unit U1 is arranged on the left side of each seat slide mechanism 15, whereas the unit U2 is arranged on the right side of the seat slide mechanism 15. The left unit U1 and the right unit U2 are arranged substantially symmetrically with respect to the center of the right-left directions of the lower rail 16. The respective structures of the left unit U1 and the right unit U2 are substantially symmetrical with respect to the center of the right-left directions. These units U1 and U2 having structures that are substantially symmetrical to each other in the right-left directions are paired, and a plurality of pairs of units U1 and U2 are aligned in the longitudinal direction (corresponding to the front-rear directions) of the lower rail 16 and the slider 17, between the lower rail 16 and the slider 17.

As shown in FIG. 8, each retainer 22 has a retainer body 22a. At an upper end part of the retainer body 22a, a plurality of supports 22h, 22i, and 22j are formed apart from one another in the front-rear directions. Between the supports 22h and 22i, and between the supports 22i and 22j, at the upper end part of the retainer body 22a, recesses 22k and 22l recessed downward are formed, respectively. The two upper slide-allowing members 30U are positioned within the recesses 22k and 22l, and supported by the supports 22h and 22i, and the supports 22i and 22j, respectively.

Similarly to the upper end part of the retainer 22, a plurality of supports 22m, 22n, and 22o are formed at a lower end part of the retainer body 22a apart from one another in the front-rear directions. Between the supports 22m and 22n, and between the supports 22n and 22o at the lower end part of the retainer body 22a, recesses 22p and 22q recessed upward are formed respectively. The two lower slide-allowing members 30L are positioned within the recesses 22p and 22q, and supported by the supports 22m and 22n, and the supports 22n and 22o, respectively.

To support the two spheric upper slide-allowing members 30U, the retainer 22 has spherically concaved recesses (not shown) formed on both opposing surface portions of the support 22h and the support 22i, and both opposing surface portions of the support 22i and the support 22j. Further, to support the two spheric lower slide-allowing members 30L, the retainer 22 has spherically concaved recesses (not shown) formed on both opposing surface portions of the support 22m and the support 22n, and both opposing surface portions of the support 22n and the support 22o.

Also in the present embodiment, while the units U1 and U2 are arranged between the lower rail 16 and the slider 17, the upper slide-allowing members 30U of each of the units U1 and U2 are interposed between the corner part 16d of the lower rail 16 and the corner part 17h of the slider 17, and the lower slide-allowing members 30L are interposed between the rounded corner part 16b of the lower rail 16 and the connecting part 17e of the slider 17.

As shown in FIG. 9, in the present embodiment, the spheric member 41 constituting each slide-allowing member 30 is a hollow spheric member with its inside being hollowed out (a hollow portion 42 is provided inside).

The spring constant of each slide-allowing member 30 is set to be smaller than the spring constant of a steel lower rail 16 or a steel slider 17. To achieve this, the spheric member 41 is made of a resin in the present embodiment.

A resin adoptable for this member can be a polyamide having an excellent impact resistance, a low-friction coefficient, and a self-lubricating property.

As shown in FIG. 8, of the slide-allowing members 30 each structured by the spheric member 41, the upper slide-allowing members 30U positioned on the upper side are each approximately 5 mm in diameter, and the lower slide-allowing members 30L positioned on the lower side are each approximately 7 mm in diameter. However, these numeric values of the diameter are no more than examples, and are not intended to limit the scope of the invention.

Note that in FIG. 8, the arrow F is directed forward, the arrow R is directed rearward, and the arrow UP is directed upward.

In this embodiment, the spring constant of each slide-allowing member 30 is set to be smaller than the spring constant of the lower rail 16 or the slider 17. This achieves the following effects.

That is, the slide-allowing members 30 each having a small spring constant damps vibration at the seat slide mechanism 15 having a large mass and arranged closely to the vibration input point (floor pan 1) in the vibration transmission pathway extending from the vibration input point to the occupant. This effectively reduces the vibration to be sensed by the occupant, while the occupant is seated on the seat 10, and hence can improve the NVH performance of the vehicle.

Further, since each slide-allowing member 30 of the present embodiment is structured by the spheric member 41 (hollow spheric member) having the hollow portion 42, the present embodiment does not necessitate significant modification to a typical existing seat slide mechanism having a plurality of balls that allow sliding of the slider along the lower rail, and achieves the above-described effect of reducing vibration, simply by replacing the balls with the spheric member 41.

(Fifth Embodiment)

FIG. 10 shows an exemplary fifth embodiment, in which the structure of each slide-allowing member 30 is different from that of the fourth embodiment. The rest of the structure is similar to that of the fourth embodiment.

That is, in the present embodiment, each slide-allowing member 30 is structured by a spheric member 43. The spheric member 43 is a solid spheric member having an outer shell 44 and an interior member 45.

Also in this embodiment, the spring constant of each slide-allowing member 30 is set to be smaller than the spring constant of the lower rail 16 or the slider 17. To achieve this, the spring constant of the interior member 45 is set to be smaller than the spring constant of the outer shell 44. Specifically, in the present embodiment, the outer shell 44 is made of a metal (e.g., stainless steel), and the interior member 45 is made of a resin (e.g., polyamide).

Since each slide-allowing member 30 of the present embodiment is structured by the spheric member 43, the present embodiment achieves the above-described effect of reducing vibration without significant modification to a typical existing seat slide mechanism having a plurality of balls that allow sliding of the slider along the lower rail, similarly to the above-described fourth embodiment.

Further, each slide-allowing member 30 (spheric member 43) has the outer shell 44 made of, for example, stainless steel. This enables improvement of durability and antirust effect of each slide-allowing member 30.

The present invention is not limited to the embodiment described above. Any substitution can be made within the scope of the claims.

For example, the above-described first embodiment deals with a case where each slide-allowing member 30 is structured by a cylindrical hollow member 31, whereas the above-described second and third embodiments deal with a case where each slide-allowing member 30 is structured by a solid member 34, 36 having a columnar shape. However, each slide-allowing member 30 may be structured by a hollow member having a shape of a square tube or a solid member having a shape of a square column.

The foregoing embodiment is merely an example in nature, and the scope of the present invention should not be interpreted in a limited manner. The scope of the present invention is defined by the appended claims, and all variations and modifications belonging to a range equivalent to the range of the claims are within the scope of the present invention.

INDUSTRIAL APPLICABILITY

The present invention is applicable to a seat slide mechanism including: a lower rail fixed to a floor pan constituting a part of a vehicle body of a vehicle and extending in the front-rear directions of the vehicle; a slider slidable in the lower rail and allowing a seat to be mounted thereabove; and a slide-allowing member arranged between the lower rail and the slider and enabling sliding of the slider along the lower rail.

DESCRIPTION OF REFERENCE CHARACTERS

1       Floor Pan
10      Vehicle Seat
15      Seat Slide Mechanism
16      Lower Rail
17      Slider
30      Slide-Allowing Member
31      Hollow Member
34      Solid Member
35      Solid Member
41      Spheric Member (Hollow Spheric Member)
43      Spheric Member (Solid Spheric Member)
44      Outer Shell
45      Interior Member

**Claims**

1.  A seat slide mechanism to be provided in a vehicle, comprising:

    a lower rail fixed to a floor pan constituting a part of a vehicle body of the vehicle and extending in front-rear directions of the vehicle;
    a slider slidable in the lower rail and allowing a seat to be mounted thereabove; and
    a slide-allowing member arranged between the lower rail and the slider and enabling sliding of the slider along the lower rail,
    the slide-allowing member having a spring constant set to be smaller than a spring constant of the lower rail or a spring constant of the slider.

2.  The seat slide mechanism of claim 1, wherein the slide-allowing member is structured by a tubular hollow member or a solid member having a pillar shape and is arranged between the lower rail and the slider in such a manner as to extend along the lower rail and the slider.

3.  The seat slide mechanism of claim 1, wherein

the slide-allowing member is structured by a spheric member, and

the spheric member is a hollow spheric member whose inside is hollowed out, or a solid spheric member having an outer shell and an interior member whose spring constant is set to be smaller than a spring constant of the outer shell.

FIG.1

FIG.2

**FIG.3**

**FIG.4**

# FIG.5

## FIG.6

30 (34)

34b

34c

34a

## FIG.7

30 (36)

34b

34c

35    34a    34

FIG.8

FIG.9

30(41)

42

FIG.10

30(43)

44

45

EP 3 683 092 A1

## INTERNATIONAL SEARCH REPORT

International application No.

PCT/JP2018/037953

### A. CLASSIFICATION OF SUBJECT MATTER
Int.Cl. B60N2/07(2006.01)i

According to International Patent Classification (IPC) or to both national classification and IPC

### B. FIELDS SEARCHED

Minimum documentation searched (classification system followed by classification symbols)
Int.Cl. B60N2/07

Documentation searched other than minimum documentation to the extent that such documents are included in the fields searched
| | |
|---|---|
| Published examined utility model applications of Japan | 1922–1996 |
| Published unexamined utility model applications of Japan | 1971–2018 |
| Registered utility model specifications of Japan | 1996–2018 |
| Published registered utility model applications of Japan | 1994–2018 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br>Y | US 2016/0101712 A1 (SAINT-GOBAIN PERFORMANCE PLASTICS PAMPUS GMBH) 14 April 2016, paragraphs [0035]–[0039], [0053]–[0057], [0063], fig. 1–2, 3A, 3B & WO 2016/059108 A1 & JP 2017-537829 A & EP 3206906 A1 & CA 2964176 A1 & KR 10-2017-0063814 A & CN 107000612 A | 1–2<br>3 |
| X<br>Y | JP 2000-62504 A (MERITOR AUTOMOTIVE CANADA, INC.) 29 February 2000, paragraphs [0011], [0013], [0017], [0022]–[0023], fig. 1–4 & US 6036253 A, specification, column 3, lines 13–26, column 3, lines 33–41, column 3, line 64 to column 4, line 10, column 4, lines 48–67, fig. 1–4 & DE 19931060 A1 | 1<br>3 |
| A | JP 2010-47132 A (NHK SPRING CO., LTD.) 04 March 2010, paragraphs [0034]–[0037] (Family: none) | 1–3 |

☐ Further documents are listed in the continuation of Box C.  ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 17 December 2018 (17.12.2018) | 25 December 2018 (25.12.2018) |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |
|---|---|

Form PCT/ISA/210 (second sheet) (January 2015)

17

**EP 3 683 092 A1**

**Patent documents cited in the description**

- JP 2016196262 A